# EUROPÄISCHE PATENTSCHRIFT

(11) **EP 4 151 384 B1**
(45) Veröffentlichungstag und Bekanntmachung des Hinweises auf die Patenterteilung: **02.10.2024**
(21) Anmeldenummer: 22193102.5
(22) Anmeldetag: 31.08.2022
(51) Int. Cl.: B29C 37/00

(54) **VERFAHREN ZUM HERSTELLEN VON KUNSTSTOFFSPRITZGUSSBAUTEILEN SOWIE KUNSTSTOFFSPRITZGUSSBAUTEIL**
PLASTIC INJECTION MOULDED PART AND METHOD FOR MANUFACTURING PLASTIC INJECTION MOULDED PARTS
PROCÉDÉ DE FABRICATION DE COMPOSANTS EN MATIÈRE PLASTIQUE MOULÉS PAR INJECTION, AINSI QUE COMPOSANT EN MATIÈRE PLASTIQUE MOULÉ PAR INJECTION

(30) Priorität: 16.09.2021 DE 102021210271
(43) Veröffentlichungstag der Anmeldung: 22.03.2023
(73) Patentinhaber: Magna Exteriors GmbH, 63877 Sailauf (DE)
(72) Erfinder: BENITEZ, Miguel, 63533 Mainhausen (DE); FUNK, Wolfgang, 73614 Schorndorf (DE); MÜNKER, Klaus, 83556 Griesstätt (DE)
(74) Vertreter: Rausch, Gabriele

(56) Entgegenhaltungen:
- DE-C1- 19 607 855
- US-A- 5 681 356

## Beschreibung

Die Erfindung betrifft ein Verfahren zum Herstellen von Kunststoffspritzgussbauteilen mit mindestens einer Halterung für Sensoren sowie Kunststoffspritzgussbauteil.

### Stand der Technik

Bei Kraftfahrzeugen werden in Karosserieteilen Sensoren verbaut, welche bspw. der Abstandsmessung dienen. Solche Sensoren können in einem Stoßfänger der Vorder- und/oder der Rückseite eingebaut sein und während des Einparkens den Abstand zu einem Hindernis, einem weiteren Fahrzeug erfassen. Derartige Systeme sind als PDC Sensoren bekannt.

Bekannte Sensoren dieser Art sind in Durchbrüchen von Stoßfängern eingelassen und mit einer der Farbe des Fahrzeuges, des Stoßfängers lackiert. Ein Beispiel für einen in einem Karosserieteil, einer Stoßleiste oder einem Stoßfänger eingelassenen PDC Sensor zeigt die DE 103 14 862 A1.

Nachteilig bei einer derartigen Lösung ist die Sichtbarkeit der Sensoren, auch wenn deren sichtbare Oberfläche in Farbe der Stoßleiste lackiert ist.

Aus der DE 200 10 478 U1 ist ein Bauteil eines Fahrzeugs bekannt, wobei ein Befestigungselement für einen Parksensor an einem Stoßfänger vorhanden ist. Das Befestigungselement umfasst ein Verbindungsteil und ein Einbaugehäuse, die aus unterschiedlichen Kunststoffmaterialien z. B. mittels eines Zweikomponenten-Spritzgießverfahrens hergestellt und formschlüssig miteinander verbunden sind. Dabei hat das Verbindungsteil die Aufgabe, das gesamte Befestigungselement mitsamt dem eingesetzten Parksensor an dem Stoßfänger eines Kraftfahrzeugs insbesondere über eine Schweißverbindung zu befestigen. Das Verbindungsteil weist ein im wesentlichen zylindrisches Aufnahmeteil auf, an dessen oberen Rand ein eine Öffnung umschließender Schweißflansch vorgesehen ist. In dieser Öffnung ist der Parksensor angeordnet, wenn er in dem zylindrischen Einbaugehäuse aufgenommen und daran festgelegt ist.

Aus der DE 10 2006 022 925 B4 ist ein Bauteil bekannt, das zur Aufnahme von Sensoren dient. Die erste Komponente des Bauteils ist aus Polycarbonat hergestellt und bildet ein flächig durchgehend gebildetes Außenteil des Bauteils und die Halterung lagert den Sensor an der Innenseite der ersten Komponente des Bauteils. Hierbei wird in dem 2K-Spritzgießvorgang sowohl die erste Komponente wie auch die zweite Komponente des Bauteils gebildet, die die Halterung für den Sensor bildet, so dass ein zusätzliches Halterungsteil, das noch montiert werden müsste, nicht erforderlich ist.

Heißverstemmen ist ein Verfahren zum Verbinden zweier Bauteile, von denen mindestens eines aus thermoplastischem Kunststoff besteht. Beim Heißverstemmen wird ausgenutzt, dass Thermoplaste bei Wärmezufuhr einen teigigen Zustand annehmen. Zu den Thermoplasten zählen zum Beispiel Polyethylen (PE), Polypropylen (PP), Polyvinylchlorid (PVC) und Polycarbonat (PC). Das Verfahren ist auch für Thermoplaste mit einem hohen Glasfaseranteil geeignet. Bei Erwärmung wird das Material weich und verformbar. In diesem Zustand lässt es sich mit dem angrenzenden Bereich verschweißen oder mit einem Stempel umformen. Damit entsteht eine dauerhafte form- und kraftschlüssige, manchmal auch stoffschlüssige, Verbindung, die die Übertragung von Kräften und Drehmomenten gestattet. Da Kunststoffe schlechte Wärmeleiter sind und das Verfahren nur kurze Zeitspannen von wenigen Sekunden beansprucht, ist die Temperaturerhöhung auf einen engen räumlichen Bereich begrenzt.

DE 199 20 941 A1 zeigt ein Verfahren zur Herstellung von Kunststoffteilen mit einer aufgeprägten Struktur für räumlich spritzgegossenen Schaltungsträgern durch Heißprägen einer Leiterbahnstruktur von einer Folie auf ein spritzgegossenes Substrat.

Die Arbeitsweise der Spritzgießmaschine ist dergestalt, dass im Takt-1 das Kunststoffteil gespritzt wird und gleichzeitig im Takt-2 der Prägeschritt ausgeführt wird.

DE 198 19 791 A1 zeigt eine Einrichtung zur Trennung eines geformten Substrates von einem Prägewerkzeug mit einem Paar gegeneinander verstellbarer Kammerteile einer verschließbaren Kammer, von denen ein erstes Kammerteil als Träger des Prägewerkzeuges und ein zweites Kammerteil als Träger des formbaren Substrates dienen. Die Kammer enthält einen Substrathalter, der das Substrat bei geschlossener Kammer außerhalb des Prägebereiches an seinem Träger fixiert, wodurch beim Öffnen der Kammer eine Ablösung des Substrates von dem Prägewerkzeug erfolgt. Das zweite Kammerteil wir durch einen ringförmigen Vorsprung des Substrathalters gebildet und nicht vom Prägestempel selbst. Das ringförmige zweite Kammerteil wird mit Druckluft beaufschlagt, um eine leichtere Entformung des Substrates zu erlauben.

US 5 681 556 A1 offenbart ein Verfahren zur Herstellung eines Kunststoffspritzgussbauteils aus einem Kunststoff mit mindesten einer Ausnehmung geeignet zur Aufnahme von Sensoren durch Bildung einer Wulst auf der Oberfläche des Kunststoffspritzgussbauteils mit folgenden Schritten: Herstellen des Kunststoffspritzgussbauteils in einem Werkzeug mit oberer und unterer Werkzeughälfte, Einbringen eines temperierbaren Stempels, der in einer Hülse eführt ist, Aufsetzen der Hülse mit integriertem Ringraum auf der Oberfläche des Kunststoffspritzgussbauteils, Einpressen des temperierten Stempels in die Oberfläche des Kunststoffspritzgussbauteils unter Ausbildung einer ringförmigen Wulst im Ringraum durch Verdrängen von aufgeschmolzenem Material des Kunststoffspritzgussbauteils in Richtung auf den Ringraum und Abkühlen des Stempels und Abheben von der Oberfläche.

DE 196 07 855 C1 zeigt ein Verfahren zur Herstellung von Formteilen mit von Beleg- oder Dekormaterial bedeckter Oberfläche durch Hinterspritzen und anschließendem Umbugen. Dabei wird ein Beleg- oder Dekormaterialende durch Eindrücken in das noch plastisch verformbare Formteil mit drei Schieberwerkzeugen gebogen.

Es ist Aufgabe der Erfindung, ein Bauteil herzustellen, das auf Zweikomponentenspritzguss verzichtet und trotzdem ein sicheres Halten eines Sensors erlaubt, wobei die von außen sichtbare Oberfläche des Bauteils ungestört bleibt und wobei in einem schlechten Wärmeleiter für kurze Zeitintervalle von wenigen Sekunden einen räumlich begrenzten Temperaturanstieg erzeugt wird.

### Beschreibung der Erfindung

Die Aufgabe wird gelöst mit einem Verfahren zur Herstellung eines Kunststoffspritzgussbauteils aus einem Kunststoff mit mindesten einer Ausnehmung zur Aufnahme von Sensoren durch Bildung einer Wulst auf der Oberfläche (8) der Kunststoffspritzgussbauteils mit den folgenden Schritten:
Herstellen des Kunststoffspritzgussbauteils in einem Werkzeug mit oberer und unterer Werkzeughälfte,
Abheben der oberen Werkzeughälfte und Einbringen eines temperierbaren Stempels, der in einer Hülse geführt ist,
Aufsetzen der Hülse mit integriertem Ringraum auf der Oberfläche des Kunststoffspritzgussbauteils,
Einpressen des temperierten Stempels in die Oberfläche des Kunststoffspritzgussbauteils unter Ausbildung einer ringförmigen Wulst im Ringraum durch Verdrängen von aufgeschmolzenem Material des Kunststoffspritzgussbauteils in Richtung auf den Ringraum,
Abkühlen des Stempels (3) und Abheben von der Oberfläche.

Der Ringraum ist von der Oberfläche des Spritzguss-Bauteils, der Außenfläche der Hülse, der Begrenzung der Hülse, sowie dem Außenmantel des Stempels begrenzt.

Die Aufgabe wird auch gelöst mit einem Verfahren, wobei die Einpresstiefe des Stempels größer oder gleich der Hälfte der Dicke des Kunststoffspritzgussbauteils ist.

### Beschreibung der Figuren

Figur 1a, 1b, 1c zeigt schematisch Herstellungsschritte einer Halterung in einer Herstellungsanlage für Kunststoffspritzguss,
Figur 2 zeigt Details des Stempels.

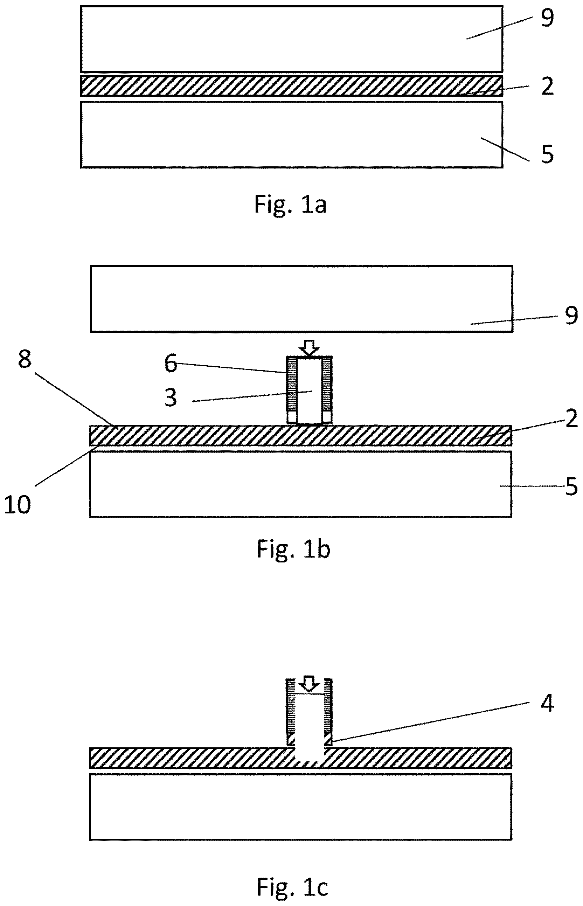

Figur 1a zeigt schematisch ein Spritzgusswerkzeug, das aus einer unteren Werkzeughälfte 5 und einer oberen Werkzeughälfte 9 besteht. Die beiden Werkzeughälften 5, 9 bilden eine Kavität aus, die die Form des Kunststoffspritzgussbauteils 2 bestimmt. Das Kunststoffspritzgussbauteil 2 wird von den beiden inneren Oberflächen der beiden Werkzeughälften 5 und 9 definiert, wobei in dem gezeigten Schema die Ränder als Begrenzung nicht weiter dargestellt sind.

Nach der Herstellung des Kunststoffspritzgussbauteils 2 wird die obere Werkzeughälfte 9 abgehoben. Das Kunststoffspritzgussbauteil 2 bleibt auf der unteren Werkzeughälfte 5 liegen und kann über die Auflagefläche temperiert werden. Z. B. langsamer abgekühlt werden als nach einer vollständigen Entformung.

Um eine Aussparung für den Verbau eines Sensors herzustellen, wird ein temperierbaren Stempel 3 auf die Oberfläche 8 des Spritzguss-Bauteils 2 aufgesetzt.

Die Oberfläche 8 ist die im Fahrzeug nach innen gewandte Seite. Der temperierbaren Stempel 3 befindet sich in einer Hülse 6, die von einem nicht weiter gezeigten Werkzeughalter in die Spritzgussmaschine eingeführt wird.

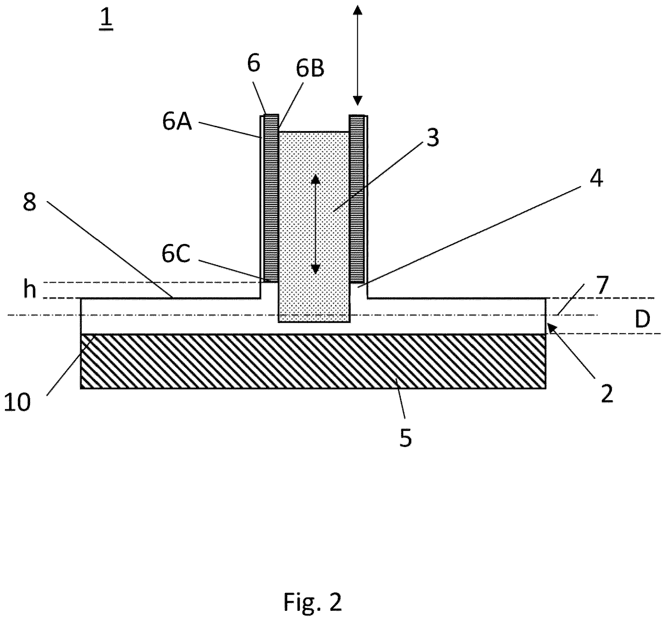

Die genaue Ausführungsform des Stempels 3, sowie der Hülse 6 ist in Figur 2 näher erläutert. Die Hülse 6 besteht aus einem Zylinder mit einer Außenfläche 6A sowie einer Innenfläche 6B. Die Hülse 6 besitzt eine horizontale Begrenzung 6C, die die Innenfläche 6B mit der Außenfläche 6A verbindet. Dabei ist die Innenfläche 6B gegenüber der Außenfläche 6A verkürzt. Die Außenfläche 6A sitzt bündig auf dem Spritzguss-Bauteil 2 auf, während die Innenfläche 6A um eine gewisse Höhe h von der Oberfläche des Kunststoffspritzgussbauteils 2 beabstandet ist.

Dadurch ergibt sich ein Raum 4, der bei einem zylindrischen Stempel 3 einen Ring bildet. Dieser Ringraum 4 wird zunächst von der Oberfläche 8 des Spritzguss-Bauteils 2, der Außenfläche 6A der Hülse 6, der Begrenzung 6C der Hülse 6, sowie dem Außenmantel des Stempels 3 begrenzt.

Im nächsten Verfahrensschritt wird der Stempel 3 erwärmt und unter Druck in das Spritzguss-Bauteil 2 gepresst. Das Einpressen erfolgt bis in eine Tiefe, die die Gesamtdicke D des Spritzguss-Bauteils 2 nicht durchdringt. Die Eindringtiefe ist aber größer als die halbe Dicke D/2 es Kunststoffspritzgussbauteils 2. Dadurch dringt der Stempel 3 in das Kunststoffspritzgussbauteil 2 ein und durchdringt die Mittelachse 7 des Kunststoffspritzgussbauteils 2.

Durch den Wärmeeintrag des Stempels 3 schmilzt das Material des Kunststoffspritzgussbauteils 2 auf und wird durch den Druck des Stempels 3 und die limitierte Schmelzzone in dem Kunststoffspritzgussbauteil 2 hauptsächlich nach oben verdrängt. Die Schmelzzone bildet nur einen schmalen Ring um den geheizten Stempel und erstreckt sich nicht weit in das Kunststoffspritzgussbauteil 2 hinein. Dadurch tritt das Material in den dafür vorgesehenen Ringraum 4 ein.

Im nächsten Verfahrensschritt wird der Stempel 3 nicht mehr beheizt, er kann sogar einer Kühlung unterzogen werden. Anschließend wird der Stempel 3 nach oben aus dem Kunststoffspritzgussbauteil 2 entfernt.

Da das Umformen mit dem Stempel 3 in der unteren Werkzeughälfte 5 geschieht, bleibt die äußere Oberfläche 10 des Kunststoffspritzgussbauteils 2 immer im Kontakt mit der unteren Werkzeughälfte 5. Dadurch werden Effekte einer minimalen Temperatureintragung minimiert und die Oberfläche wird durch die untere Werkzeughälfte gekühlt und stabilisiert, um so einen optimale Oberfläche auf der zur Fahrzeugaußenseite liegenden Oberfläche zu bewahren.

Anschließend kann das Kunststoffspritzgussbauteil 2 aus dem Werkzeug entnommen werden. Es weist jetzt die von dem Spritzgusswerkzeug vorgegebene Form auf sowie eine Ausnehmung auf, die der Form eines zu verbauenden Sensors angepasst ist. Eine ringförmige Wulst ist durch die Behandlung mit dem Stempel entstanden und dient als Rahmen und zur Fixierung eines zu verbauenden Sensors.

Die Form der jeweiligen Ausnehmung im Kunststoffspritzgussbauteil 2 wird durch den verwendeten Stempel 3 und die Hülse 6 bestimmt. Die Stempel 3 und die Hülse 6 sind mit Beschichtungen versehen, die sich leicht vom Material lösen. Dadurch wird das Ausziehen von Materialfäden beim Abheben vermieden.

Der Temperaturverlauf, die Einsinkgeschwindigkeit des Stempels, die Kraft des Stempels und die optimalen Zeiten für Verweilen und Kühlen werden an jeden speziellen Einsatzfall genau angepasst.

## Patentansprüche

1. Verfahren zur Herstellung eines Kunststoffspritzgussbauteils (2) aus einem Kunststoff mit mindesten einer Ausnehmung zur Aufnahme von Sensoren durch Bildung einer Wulst auf der Oberfläche (8) der Kunststoffspritzgussbauteils (2) mit den folgenden Schritten:
Herstellen des Kunststoffspritzgussbauteils (2) in einem Werkzeug mit oberer und unterer Werkzeughälfte (5, 9),
Abheben der oberen Werkzeughälfte (9) und Einbringen eines temperierbaren Stempels (3), der in einer Hülse (6) geführt ist,
Aufsetzen der Hülse (6) mit integriertem Ringraum (4) auf der Oberfläche des Kunststoffspritzgussbauteils (2),
Einpressen des temperierten Stempels (3) in die Oberfläche (8) des Kunststoffspritzgussbauteils (2) unter Ausbildung einer ringförmigen Wulst im Ringraum (4) durch Verdrängen von aufgeschmolzenem Material des Kunststoffspritzgussbauteils (2) in Richtung auf den Ringraum (4)
Abkühlen des Stempels (3) und Abheben von der Oberfläche (8),
**dadurch gekennzeichnet, dass** der Ringraum (4) von der Oberfläche (8) des Kunststoffspritzgussbauteils (2), der Außenfläche (6A) der Hülse (6), der Begrenzung (6C) der Hülse (6), sowie dem Außenmantel des Stempels (3) begrenzt ist.

2. Verfahren nach Anspruch 1, **dadurch gekennzeichnet, dass** die Einpresstiefe des Stempels (3) größer oder gleich der Hälfte der Dicke D des Kunststoffspritzgussbauteils (2) ist.

3. Verfahren nach einem der vorhergehenden Ansprüche, wobei der Ringraum (4) und die Hülse (6) und der Stempel (3) eine beliebige Kontur des Ringraums (4) aufweisen.

## Claims

1. Method for producing an injection-moulded plastic component (2) made of a plastic having at least one recess for accommodating sensors by forming a bead on the surface (8) of the injection-moulded plastic component (2), having the following steps:
producing the injection-moulded plastic component (2) in a mould having top and bottom mould halves (5, 9),
raising the top mould half (9) and introducing a thermoregulatable ram (3) which is guided in a sleeve (6),
placing the sleeve (6) with integrated annular space (4) on the surface of the injection-moulded plastic component (2),
pressing the thermoregulated ram (3) into the surface (8) of the injection-moulded plastic component (2) to form an annular bead in the annular space (4) by displacing melted material of the injection-moulded plastic component (2) in the direction of the annular space (4),
cooling the ram (3) and raising it from the surface (8),
**characterized in that** the annular space (4) is bounded by the surface (8) of the injection-moulded plastic component (2), the outer face (6A) of the sleeve (6), the boundary (6C) of the sleeve (6), and the outer casing of the ram (3).

2. Method according to Claim 1, **characterized in that** the press-in depth of the ram (3) is not less than half the thickness D of the injection-moulded plastic component (2).

3. Method according to either of the preceding claims, where the annular space (4) and the sleeve (6) and the ram (3) exhibit any desired contour of the annular space (4).

## Revendications

1. Procédé de fabrication d'un composant en matière plastique moulé par injection (2) à partir d'une matière plastique, comportant au moins une cavité pour recevoir des capteurs, par formation d'un bossage sur la surface (8) du composant en matière plastique moulé par injection (2), comportant les étapes suivantes :
fabrication du composant en matière plastique moulé par injection (2) dans un moule comportant une partie mobile supérieure et une partie mobile inférieure (5, 9),
enlèvement de la partie mobile supérieure (5) et introduction d'un poinçon thermorégulé (3), qui est guidé dans un manchon (6),
positionnement du manchon (6), avec espace annulaire intégré (4), sur la surface du composant en matière plastique moulé par injection (2),
enfoncement du poinçon thermorégulé (3) dans la surface (8) du composant en matière plastique moulé par injection (2) avec formation d'un bossage annulaire dans l'espace annulaire (4) par déplacement de la matière fondue du composant en matière plastique moulé par injection (2) dans la direction de l'espace annulaire (4)
refroidissement du poinçon (3) et son détachement de la surface (8),
**caractérisé en ce que** l'espace annulaire (4) est limité par la surface (8) du composant en matière plastique moulé par injection (2), de la surface extérieure (6A) du manchon (6), de la délimitation (6C) du manchon (6), ainsi que de l'enveloppe extérieure du poinçon (3).

2. Procédé selon la revendication 1, **caractérisé en ce que** la profondeur d'enfoncement du poinçon (3) est supérieure ou égale à la moitié de l'épaisseur D du composant en matière plastique moulé par injection (2).

3. Procédé selon l'une des revendications précédentes, dans lequel l'espace annulaire (4) et le manchon (6) et le poinçon (3) présentent un contour quelconque de l'espace annulaire (4).
